# EUROPEAN PATENT APPLICATION

(11) **EP 3 115 890 A1**
(43) Date of publication of application: **11.01.2017**
(21) Application number: 16176904.7
(22) Date of filing: 29.06.2016
(51) Int. Cl.: G06F 9/445, G03G 15/00, G06F 3/12, G06F 9/44

(54) **REMOTE AND CUSTOMIZABLE USER INTERFACE FOR MULTI-FUNCTION PERIPHERALS**

(30) Priority: 08.07.2015 US 201514794572
(71) Applicant: Ricoh Company, Ltd., Tokyo 143-8555 (JP)
(72) Inventor: HONG, Jiang, Campbell, CA California 95008 (US)
(74) Representative: Schwabe - Sandmair - Marx

(57) **Abstract**

A remote MFP GUI application allows a user to use a GUI of mobile device to specify features and options to be used to perform one or more functions at an MFP, instead of, or in addition to, using the user interface of the MFP. The remote MFP GUI application generates selection data that specifies the features and options specified by the user and causes the selection data to be transmitted to the MFP. The user then completes performance of the one or more functions at the MFP. Features and options specified by a user via the GUI of mobile device may be stored as a "UI profile." UI profiles may be specific to a particular MFP, designated as a default UI profile for multiple MFPs, and may also be specific to a user. UI profiles may be created, edited, stored, retrieved and deleted.

## Description

### BACKGROUND OF THE INVENTION

### 1. Field of the Invention

Embodiments relate generally to approaches for providing remote and customizable user interfaces for multi-function peripherals (MFPs).

### 2. Description of the Related Art

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

MFPs have various types of user interfaces, ranging from very basic user interfaces that include only control buttons and sometimes a very small display, to full liquid crystal display (LCD) screens with sophisticated graphical user interfaces. For MFPs with very basic user interfaces, users may be required to select multiple control buttons numerous times to perform even basic functions, resulting in an unfavorable user experience. Furthermore, many MFP user interfaces are not customizable for particular users and all users must use a single user interface provided by the manufacturer. In contrast, many mobile devices, such as smart phones and tablet computers, include very sophisticated and user friendly graphical user interfaces.

### SUMMARY OF THE INVENTION

A mobile device comprises one or more processors, one or more memories, a display, a wireless communications interface and a remote multi-function peripheral (MFP) graphical user interface (GUI) application. The MFP GUI application is configured to retrieve, for a particular MFP, capability data that indicates one or more features and options supported by the particular MFP and cause a graphical user interface to be displayed on the display of the mobile device. The GUI visually depicts the one or more features and options supported by the particular MFP and provides graphical user interface controls for selecting and de-selecting the one or more features and for specifying one or more options for the one or more features. The MFP GUI application generates user selection data that specifies user selection or de-selection of the one or more features, or the one or more specified options for the one or more features, and causes the user selection data to be transmitted to the particular MFP. The particular MFP uses the user selection data that specifies the user selection or de-selection of the one or more features or the one or more specified options for the one or more features to perform one or more functions at least initiated by a user at the particular MFP.

### BRIEF DESCRIPTION OF THE DRAWINGS

In the figures of the accompanying drawings like reference numerals refer to similar elements.
FIG. 1 is a block diagram that depicts an arrangement for providing remote and customizable graphical user interfaces for MFPs;
FIG. 2A depicts an example applications screen displayed on a display of a mobile device for launching applications installed on mobile device;
FIG. 2B depicts an example screen generated by a remote MFP graphical user interface (GUI) application;
FIG. 2C depicts an example user interface (UI) profile screen for an MFP that shows features and options saved for an MFP;
FIG. 3A depicts an example UI profile management screen generated by a remote MFP GUI application;
FIG. 3B depicts an example UI profile edit screen generated by a UI remote MFP GUI application;
FIG. 3C depicts a UI profile edit screen after a user has selected to edit the default UI profile from a UI profile management screen;
FIG. 4 depicts example UI profile data that includes global UI profile data, default UI profile data and specific UI profile data;
FIG. 5 is a flow diagram that depicts an approach for using UI profiles from the perspective of an end user;
FIG. 6 is a flow diagram that depicts an approach for using UI profiles from perspective of a remote MFP GUI application; and
FIG. 7 is a block diagram that depicts an example computer system upon which embodiments may be implemented.

### DETAILED DESCRIPTION OF THE PREFERRED EMBODIMENTS

In the following description, for the purposes of explanation, numerous specific details are set forth in order to provide a thorough understanding of the embodiments. It will be apparent, however, to one skilled in the art that the embodiments may be practiced without these specific details. In other instances, well-known structures and devices are shown in block diagram form in order to avoid unnecessarily obscuring the embodiments.
I. OVERVIEW
II. SYSTEM ARCHITECTURE
   A. Mobile Device
   B. Server
   C. Client Device and MFPs
III. REMOTE MFP GUI APPLICATION
IV. MANAGING UI PROFILES
V. USING UI PROFILES
VI. IMPLEMENTATION MECHANISMS

### I. OVERVIEW

A remote MFP GUI application on a mobile device provides a remote and customizable GUI that allows a user to specify features and options to be used to perform one or more functions at an MFP, instead of, or in addition to, using the user interface of the MFP. The remote MFP GUI application generates selection data that specifies the features and options specified by the user and causes the selection data to be transmitted to the MFP. The user then completes performance of the one or more functions at the MFP, for example, by providing a printed document to the MFP for copying or scanning and selecting one or more controls on the MFP to initiate the copy or scan function. Features and options specified by a user via the GUI of mobile device may be stored as a "UI profile". UI profiles may be specific to a particular MFP or may be designated as a default UI profile for multiple MFPs, and UI profiles may also be specific to a user, allowing users to have their own customizable remote GUI interface for performing operations on MFPs. UI profiles may be created, edited, stored, retrieved and deleted. This allows users to create UI profiles via the GUI of mobile device 102 and then re-use the UI profiles any number of times to perform functions on MFPs using the GUI of a mobile device.

### II. SYSTEM ARCHITECTURE

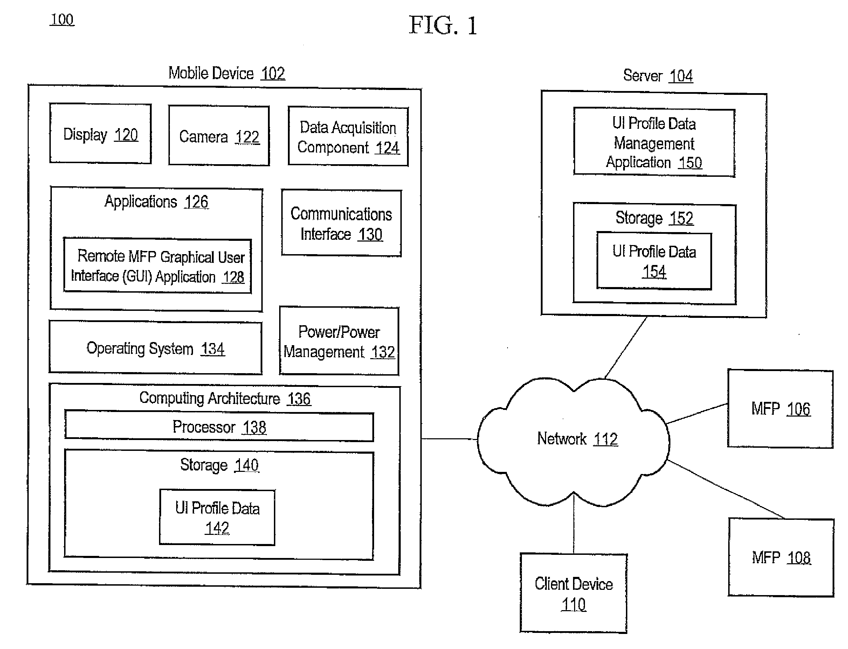

FIG. 1 is a block diagram that depicts an arrangement 100 for providing remote and customizable graphical user interfaces for MFPs. Arrangement 100 includes a mobile device 102, a server 104, MFPs 106, 108 and a client device 110, communicatively coupled via a network 112. Arrangement 100 is not limited the particular elements depicted in FIG. 1 and may include fewer or additional elements depending upon a particular implementation. Embodiments are described herein in the context of a single mobile device 102 for purposes of explanation, but the approach is applicable to any number of mobile devices. Network 112 is depicted in FIG. 1 as a single network for purposes of explanation only and network 112 may include any number and type of wired or wireless networks, such as local area networks (LANs), wide area networks (WANs), the Internet, etc. The various elements depicted in FIG. 1 may also communicate with each other via direct communications links that are not depicted in FIG. 1 for purposes of explanation.

### A. Mobile Device

Mobile device 102 may be any type of mobile device and examples of mobile device 102 include, without limitation, a smart phone, a camera, a tablet computing device, a personal digital assistant or a laptop computer. In the example depicted in FIG. 1, mobile device 102 includes a display 120, a camera 122, a data acquisition component 124, applications 126, including a remote MFP GUI application 128, a communications interface 130, a power/power management component 132, an operating system 134, a computing architecture 136 that includes a processor 138 and storage 140 that stores user interface (UI) profile data 142.

Mobile device 102 may include fewer or more components that those depicted in FIG. 1 and described herein and the particular components used may vary depending upon a particular implementation and mobile device 102 is not limited to a particular set of components or features. For example, mobile device 102 may include a location component, such as a GPS component, that is capable of determining a current location of mobile device 102 and generating location data that indicates the current location of mobile device 102. Mobile device 102 may also include manual controls, such as buttons, slides, etc., not depicted in FIG. 1, for performing various functions on mobile device, such as powering on/off or changing the state of mobile device 102 and/or display 120, or for acquiring digital images.

Display 120 may be implemented by any type of display that displays images and information to a user and may also be able to receive user input and embodiments are not limited to any particular implementation of display 120. Mobile device 102 may have any number of displays 120, of similar or varying types, located anywhere on mobile device 102. Camera 122 may be any type of camera and the type of camera may vary depending upon a particular implementation. As with display 120, mobile device 102 may be configured with any number of cameras 122 of similar or varying types, for example, on a front and rear surface of mobile device 102, but embodiments are not limited to any number or type of camera 122.

Data acquisition component 124 may comprise hardware subcomponents, programmable subcomponents, or both. For example, data acquisition component 124 may include one or more cameras, scanners, memory units or other data storage units, buffers and code instructions for acquiring, storing and transmitting data, or any combination thereof. Data acquisition component 124 may be configured with a Wi-Fi interface and a barcode reader. The Wi-Fi interface may be used to transmit information to and from the data acquisition component 124. The barcode reader may be used to scan or otherwise acquire a code, such as a point of sale (POS) code displayed on an item.

Communications interface 130 may include computer hardware, software, or any combination of computer hardware and software to provide wired and/or wireless communications between mobile device 102 and other devices and/or networks. The particular components for communications interface 130 may vary depending upon a particular implementation and embodiments are not limited to any particular implementation of communications interface 130. Power/power management component 132 may include any number of components that provide and manage power for mobile device 102. For example, power/power management component 132 may include one or more batteries and supporting computer hardware and/or software to provide and manage power for mobile device 102.

Computing architecture 136 may include various elements that may vary depending upon a particular implementation and mobile device 102 is not limited to any particular computing architecture 136. In the example depicted in FIG. 1, computing architecture includes a processor 138 and a storage 140. Processor 138 may be any number and types of processors and storage 140 may be implemented by any number and types of memories, including volatile memory and non-volatile memory, which may vary depending upon a particular implementation. Computing architecture 136 may include additional hardware, firmware and software elements that may vary depending upon a particular implementation. In the example depicted in FIG. 1 storage 140 stores UI profile data 142, as described in more detail hereinafter, and storage 140 may store additional data depending upon a particular implementation.

Operating system 134 executes on computing architecture 136 and may be any type of operating system that may vary depending upon a particular implementation and embodiments are not limited to any particular implementation of operating system 134. Operating system 134 may include multiple operating systems of varying types, depending upon a particular implementation. Applications 126 may be any number and types of applications that execute on computing architecture 136 and operating system 134. Applications 126 may access components in mobile device 102, such as display 120, camera 122, computing architecture 136, communications interface 130, power/power management component 132 and other components not depicted in FIG. 1, via one or more application program interfaces (APIs) for operating system 134.

Applications 126 may provide various functionalities that may vary depending upon a particular application and embodiments are not limited to applications 126 providing any particular functionality. Common non-limiting examples of applications 126 include social media applications, navigation applications, telephony, email and messaging applications, and Web service applications. In the example depicted in FIG. 1, applications 126 include a remote MFP GUI application 128 that provides remote and customizable graphical user interfaces for MFPs. As described in more detail hereinafter, remote MFP GUI application 128 allows a user to use the GUI of mobile device 102, instead of, or in addition to the user interface provided by the MFP, to specify features and options to be used to perform functions on an MFP, such as copying, scanning, etc. In addition, user selection and de-selection of features and options may be stored as profile data for a particular MFP, or as default profile data for two or more MFPs. Remote MFP GUI application 128 may be implemented in computer hardware, computer software, or any combination of computer hardware and software.

### B. Server

Server 104 may be implemented as any types of data repository for storing data. Server 104 may represent one or more elements in a cloud computing environment. In the example depicted in FIG. 1, server 104 includes a UI profile data management application 150 and storage 152 that stores UI profile data 154. Storage 152 may be implemented by any number and types of memories, including volatile memory and non-volatile memory, which may vary depending upon a particular implementation. Server 104 may include various other components that may vary depending upon a particular implementation and server 104 is not limited to a particular set of components or features.

UI profile data management application 150 provides various management functionality with respect to UI profile data 154, including storing and retrieving UI profile data 154 in response to requests from remote MFP GUI application 128 or client device.

### C. Client Device and MFPs

Client device 110 may be any type of client device and examples of client device 110 include, without limitation, a smart phone, a camera, a tablet computing device, a personal digital assistant or a laptop computer. As described in more detail hereinafter, client device 110 may be used to access an interface provided by UI profile data management application 150 for managing UI profile data 154.

MFPs 106, 108 are multi-function peripherals that are configured to perform two or more functions. Example functions include, without limitation, scanning, printing, copying, or facsimile. MFPs 106, 108 may include communications interface, such as wired or wireless communications interfaces to facilitate wired and/or wireless communications with other devices. MFPs 106, 108 may support a wide variety of communications protocols, such as HTTP. MFPs 106, 108 may support a wide variety of methods of communication including, for example, Wi-Fi communications, Bluetooth and near field communications. MFPs 106, 108 may also hardware and or computer software that provides the capability to provide information to mobile device 102 and client device 110 in response to a request from mobile device 102 or client device 110. For example, MFPs 106, 108 may include a server component for fulfilling requests for data from mobile device 102 or client device 110. MFPs 106, 108 may also be configured to use other methods for providing requests information to mobile device 102 or client device 110, such as JSON.

### III. REMOTE MFP GUI APPLICATION

Remote MFP GUI application 128 allows a user to use a GUI of mobile device 102 to specify features and options to be used to perform one or more functions at an MFP, instead of, or in addition to, using the user interface of the MFP. Features and options specified by a user via the GUI of mobile device 102 may be stored as a "UI profile". UI profiles may be specific to a particular MFP, referred to herein as a "particular UI profile", or may be designated as a default UI profile for multiple MFPs, referred to herein as a "default UI profile". UI profiles may also be specific to a user, meaning that a first user may have a first particular UI profile for a particular MFP and a second user may have a second particular UI profile for the same particular MFP, where the first particular UI profile and the second particular UI profile specify different features and/or options. UI profiles may be created, edited, stored, retrieved and deleted. This allows users to create a UI profile via the GUI of mobile device 102 and then use the UI profile any number of times to perform functions on an MFP using the GUI of mobile device 102.

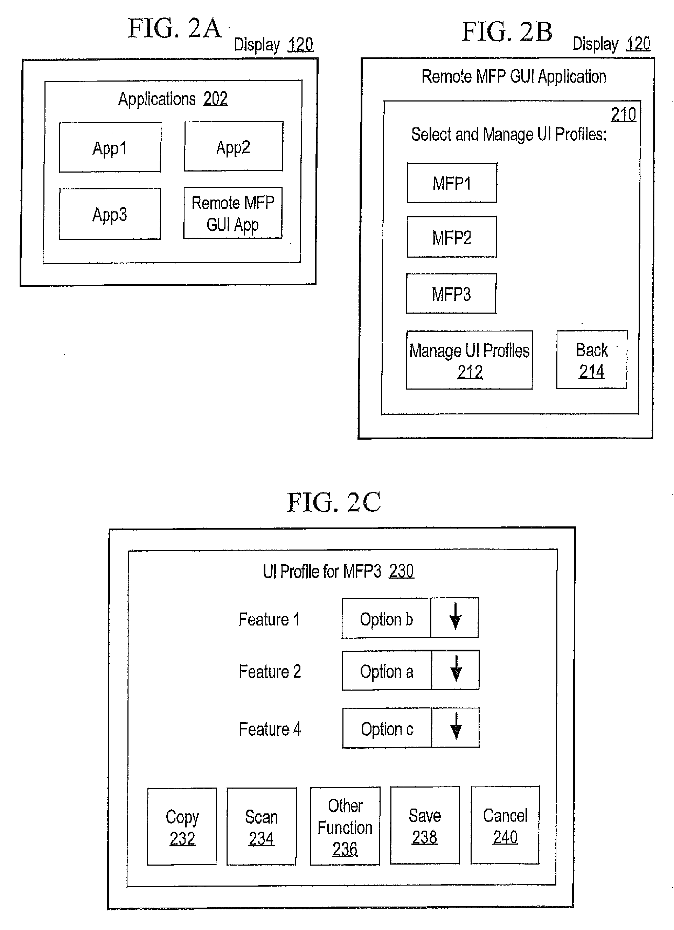

FIG. 2A depicts an example applications screen 202 displayed on display 120 of mobile device 102 for launching applications installed on mobile device 102. In this example, applications screen 202 includes graphical user interface objects that correspond to applications "App1", "App2", "App3", which may be any type of application installed on mobile device 102, and a graphical user interface object that corresponds to remote MFP GUI application 128.

FIG. 2B depicts an example screen 210 generated by remote MFP GUI application 128 after a user has selected the graphical user interface object that corresponds to remote MFP GUI application 128 in applications screen 202 of FIG. 2A. Screen 210 allows a user to select a saved UI profile for MFP1, MFP2 or MFP3, create, edit or delete UI profiles by selecting a Manage UI Profiles button 212, or return to the applications screen 202 of FIG. 2A by selecting a Back button 214.

FIG. 2C depicts an example UI profile screen 230 for MFP3 that shows the features and options saved for MFP3. A user may use the saved features and options and select a function via a Copy button 232, a Scan button 234 or an Other function button 236. Selecting the Scan button 234 may cause a prompt to be displayed querying a user for a destination for the scan data. Selecting the Other function button 236 may cause one or more other screens to be displayed that allow a user to select particular other functions.

Once a function has been selected, data that indicates the selected function and the features and options is sent to the specified MFP, which in the present example is MFP3. The user then goes to the specified MFP to complete the function at the MFP. For example, a user may go to the specified MFP and insert a document to be copied or scanned by the specified MFP and then select a Start button on the specified MFP to initiate the function. A user may change one or more options and save the updated options in the UI profile for MFP3 230 by selecting the Save button 238. A user may return to screen 210 of FIG. 2B by selecting the Cancel button 240. In screen 210, selection of the Manage UI Profiles button 212 allows a user to create, edit and/or delete UI profiles, as described in more detail hereinafter.

### IV. MANAGING UI PROFILES

UI profiles may be generated, stored, edited and/or deleted at mobile device 102, at other client devices, such as client device 110, and/or at server 104 via remote MFP GUI application 128 or UI profile data management application 150. UI profiles may be specific to a particular MFP ("specific UI profile"), may be a default for multiple MFPs ("default UI profile"), or may be applicable to any MFP and have all available features and options settings ("global UI profile").

According to one embodiment, remote MFP GUI application 128 provides a graphical user interface that allows users to manage UI profiles, including creating, editing and deleting UI profiles. A similar graphical user interface may be provided by UI profile data management application 150, but for purposes of explanation, embodiments are described hereinafter in the context of the graphical user interface provided by remote MFP GUI application 128.

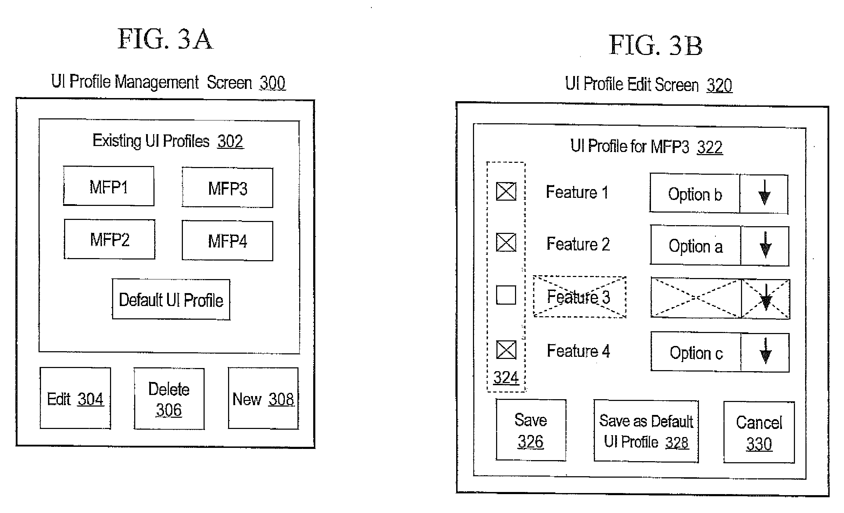

FIG. 3A depicts an example UI profile management screen 300 generated by remote MFP GUI application 128. The particular organization and layout of the various figures described hereinafter are provided for purposes of explanation only and embodiments are not limited to the particular organization and layouts depicted in the figures and described hereinafter. UI profile management screen 300 includes graphical user interface objects that correspond to existing UI profiles 302. These include a UI profile for MFP1, MFP2, MFP3 and MFP4, as well as a default UI profile that may be used for multiple MFPs. Remote MFP GUI application 128 may display all stored UI profiles for a particular user or a logical group that corresponds to the user. For example, the user may belong to a logical group within a business organization named "Engineering Group A" and remote MFP GUI application 128 may load all of the stored UI profiles for Engineering Group A. According to one embodiment, remote MFP GUI application 128 may present to a user the UI profiles for MFPs for which the remote MFP GUI application 128 can positively determine connectivity, i.e., MFPs that the remote MFP GUI application 128 can detect are available on a network. In this example, the UI profiles for MFPs that are offline may not be displayed on UI profile management screen 300. Alternatively, the UI profiles for MFPs that are offline may be displayed, but "greyed out" to indicate that a UI profile has been created for those MFPs, but the MFPs are not currently available. After selecting a graphical user interface object that corresponds to a UI profile, a user may edit the UI profile by selecting an Edit button 304 or delete the UI profile by selecting a delete button 306. A user may also create a new UI profile by selecting a New button 308.

FIG. 3B depicts an example UI profile edit screen 320 generated by UI remote MFP GUI application 128. UI profile edit screen 320 may be accessed by a user selecting, from UI profile management screen 300 (FIG. 3A), a graphical user interface object corresponding to a particular UI profile from the existing UI profiles 302, and then selecting the Edit button 304. In the present example, it is presumed that the user selected the graphical user interface object that corresponds to MFP3 and UI profile edit screen 300 depicts the UI profile for MFP3 322 that includes features and options supported by MFP3. MFP3 may correspond, for example, to MFP 106 or 108 of FIG. 1.

In the present example, it is presumed that MFP3 supports Features 1-4 and Features 1, 2 and 4 are selected for use and have a corresponding selected option value, selected from a pull-down menu. For example, Feature 1 may correspond to a duplex, i.e., double-sided, printing feature and the options may include "yes" and "no", or "duplex" and "single sided" and in FIG. 3B, the value "Value b" corresponds to one of these values. According to one embodiment, the features and options that are used to generate and populate UI profile edit screen 320 are obtained from a UI template for MFP3.

A set of graphical user interface objects 324 in the form of checkboxes allow a user to select or de-select a particular feature. In the present example, Features 1, 2 and 4 have been selected for use and Feature 3 has been de-selected for use. Feature 3 may correspond, for example, to a feature that while supported by MFP3, the user does not wish to use, such as stapling. This allows the user to customize the remote MFP GUI based upon their own preferences. Another user may choose to selection Feature 3 for use and their selection may be stored in a UI profile saved for that other user. Users may create multiple UI profiles for a single MFP. This may be useful, for example, when a user uses a particular MFP for different types of tasks.

In other embodiments, users do not de-select features for use and instead, all of the features supported by the MFP are presented, and a user selects an option value, such as "off", to designate that the particular feature will not be used. A user may save the current selections by selecting a Save button 326 so that the user's selections can be re-used. Alternatively, the user may cancel and return to the UI profile management screen 300 by selecting a Cancel button 330. A user may save a current UI profile as a default UI profile for multiple MFPs by selecting a Save as Default UI Profile button 328. A default UI profile may be designated as the default UI profile for all MFPs. Alternatively, a user may select a set of two or more MFPs that correspond to a default UI profile. Remote MFP GUI application 128 may provide GUI controls for assigning two or more MFPs to a default UI profile. A user may both save a current UI profile for a particular MFP and save the current UI profile as a default profile for multiple MFPs. For purposes of explanation, embodiments are described herein in the context of a single default UI profile, but multiple default UI profiles may be supported.

Selecting the New button 308 in UI profile management screen 300 may cause UI profile edit screen 320 to be displayed and populated with the features and options supported by the corresponding MFP. The user may then select and de-select features and select options and save the selections using the Save button 326. According to one embodiment, the features and values made available when selecting the New button 308 include a set of global features and options that represents all available features and options and some of the features and/or options may not be supported by a particular MFP. The features and/or options that are not supported by a particular MFP may be visually distinguished from other features and options that are supported by the particular MFP, for example, using shading, highlighting, different colors, fonts, etc.

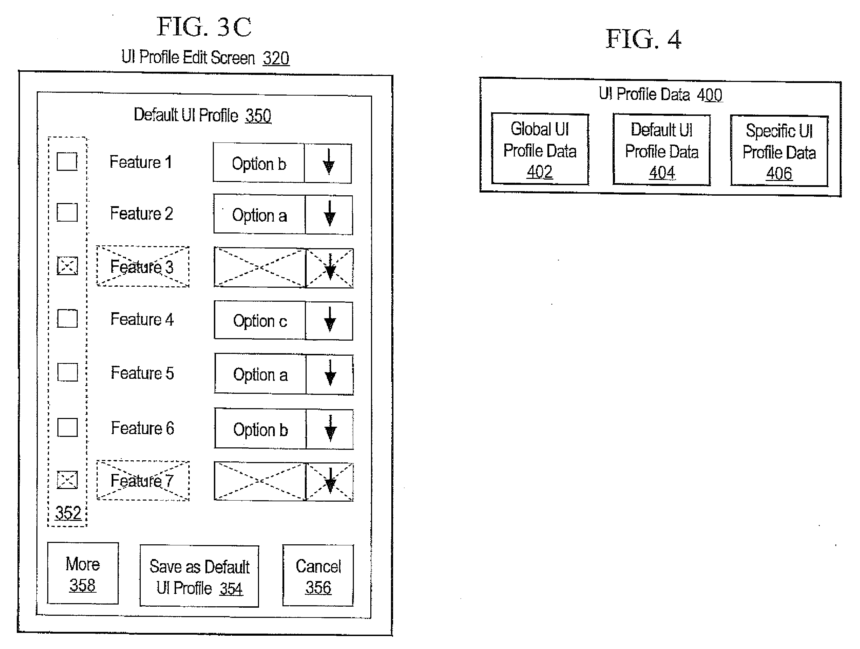

FIG. 3C depicts UI profile edit screen 320 after a user has selected to edit the default UI profile from UI profile management screen 300 (FIG. 3A). The default UI profile 350 includes a set of features and options selected by a user from the set of global features and options that represents all available features and options. Note that in the example depicted in FIG. 3C, the default UI profile 350 includes seven features, while the UI profile for MFP 3 322 (FIG. 3B) includes four features. The features and options specified by a default UI profile 350 may be selected for use with any MFP. As with the UI profile for MFP 3 322 of FIG. 3B, a user may select and de-select features using graphical user interface objects 352 and may save the selected features and options as a default UI profile using Save as Default UI Profile button 354 or may cancel and return to the UI profile management screen 300 by selecting Cancel button 356. A user may also access additional features by selecting a More button 358. The additional features may be features that were previously de-selected by a user, or features that are less-frequently used.

FIG. 4 depicts example UI profile data 400 that includes global UI profile data 402, default UI profile data 404 and specific UI profile data 406. UI profile data 400 may be stored as UI profile data 142 on mobile device 102, as UI profile data 154 on server 104, or both. Global UI profile data 402 stores a set of global features and options that may represent all available features and options. Default UI profile data 404 stores features and options for one or more default UI profiles that are used with any number of MFPs. Specific UI profile data 406 stores features and options for one or more specific UI profiles for one or more particular MFPs. Default UI profiles and specific UI profiles have features and options that are subsets of the global UI profile and may, or may not, have features and options in common.

### V. USING UI PROFILES

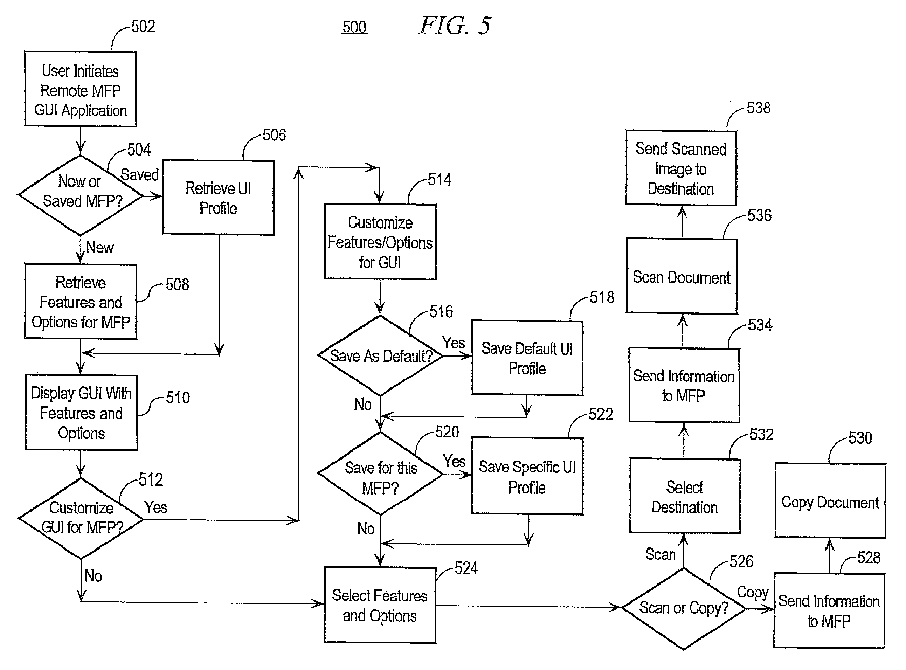

FIG. 5 is a flow diagram 500 that depicts an approach for performing functions on an MFP using UI profiles from the perspective of an end user. In step 502, a user initiates the remote MFP GUI application 128, for example, by selecting one or more icons displayed on display 120 or one or more buttons or controls on mobile device 102. In step 504, a determination is made whether the user intends to use an MFP for which a UI profile has already been created, or a new MFP. For example, remote MFP GUI application 128 may provide graphical user interface objects that correspond to the MFPs that have a saved UI profile. The user may select a graphical user interface object associated with one of the MFPs, or select a "new" button to indicate an intention to use an MFP that does not have a saved UI profile. If the user indicates an intention to use an MFP for which a UI profile has been created, then in step 506, the user selects an MFP and the corresponding UI profile is retrieved. For example, remote MFP GUI application 128 may display a list of MFPs that have saved UI profiles as depicted in FIG. 3B, and a UI profile is retrieved in response to the user selecting a particular MFP.

If, in step 504, the user indicates an intention to use a particular MFP that does not have a saved UI profile, then in step 508, the features and options supported by the particular MFP are retrieved. Data that specifies the features and options currently supported by the particular MFP may be stored in storage 140 on mobile device 102 or may be stored external to mobile device 102, for example, on server 104, or at another external location. Data that specifies the features and options currently supported by the particular MFP may be retrieved from the particular MFP. This may be accomplished by remote MFP GUI application 128 requesting, from the particular MFP, data that specifies the features and options currently supported by the particular MFP. For example, remote MFP GUI application 128 may request, from the particular MFP, a Web page or a file, such as an XML file, that contains data that specifies the features and options supported by the particular MFP. A server component on the MFP may supply the requested Web page or file.

According to one embodiment, mobile device 102 includes a capability to determine how to communicate with the particular MFP and request the data that specifies the features and options currently supported by the particular MFP. This may include, for example, a user using mobile device 102, and in particular data acquisition component 124, to acquire connection data displayed on the particular MFP, for example, displayed on a GUI of the particular MFP or printed on or affixed to the particular MFP. The connection data that indicates how to establish a communications link with the particular MFP and may include, for example, an IP address/port number, or URL for the particular MFP. The connection data may be encoded, for example, via a barcode, QR code, or other symbol and decoded by remote MFP GUI application 128. This requires that the user be close enough to the MFP to be able to acquire the encoded data using mobile device 102. According to one embodiment, the data retrieved from the MFP may also specify the features and options currently supported by the MFP. For example, the connection data and data that specifies the features and options currently supported by the MFP may be encoded in a QR code displayed by the MFP or affixed to the MFP. The MFP GUI application 128 may cause the data acquisition component 124 to acquire the encoded data and then decode the encoded data to recover the connection data and the data that specifies the features and options currently supported by the MFP.

In step 510, a GUI is displayed with features and options for the particular MFP. These are either both the features and options from the saved UI profile or the features and options retrieved, locally, externally, or from the particular MFP itself. The features and options may be displayed, for example, in a manner similar to the manner depicted in FIGS. 2B and 2C. In step 512, a determination is made whether the GUI for the particular MFP is to be customized. For example, after the features and options are displayed via remote MFP GUI application 128, a user may be provided an option to edit and confirm the new features and options in step 514. This may include, for example, selecting and de-selecting features and specifying options.

In step 516, a determination is made whether the updated features and options are to be saved as a default UI profile, i.e., for multiple MFPs. For example, as previously described herein with respect to the UI profile edit screen 220 of FIG. 2B, a user is provided an option to save the UI profile for MFP3 as a default UI profile by selecting button 228. If the updated features and options are to be saved as a default UI profile, then this is performed in step 518. In step 520, a determination is made whether the updated features and options should be saved as specific UI profile, i.e., for the particular MFP. For example, as previously described herein with respect to the UI profile edit screen 220 of FIG. 2B, a user is provided an option to save the UI profile for MFP3 as a specific UI profile by selecting button 226. This allows the features and options specified by the user to be easily retrieved in the future by selecting the UI profile stored for the particular MFP. If the updated features and options are to be saved as a specific UI profile for the particular MFP, then this is performed in step 522. The default UI profile may be selected and used with any number of MFPs. Features and options selected by the user may be stored as both a specific UI profile for a particular MFP and as a default UI profile for multiple MFPs.

In step 524, features and options are selected by the user that are to be used to perform the functions at the particular MFP. For example, if the user intends to copy a document at the particular MFP, then the user may select "yes" or "no" (or "double sided" or "single sided") to indicate whether the document should be copied using duplex, i.e., double sided, printing. As another example, if the user intends to scan a printed document at the particular MFP, then the user may select a resolution level, e.g., 300 dpi, 600 dpi, etc., for the scan. In step 526, a determination is made whether the user has selected to perform scanning or copying at the particular MFP. The function to be performed may be selected via the GUI provided by remote MFP GUI application 128. For example, the GUI provided by remote MFP GUI application 128 may include graphical user interface objects that correspond to the functions supported by the particular MFP. Other functions may be used instead of, or in addition to, scanning and copying, and scanning and copying are depicted in the figures and described herein for the purposes of explanation.

If, in step 526, the user selected to perform a copy function at the particular MFP, then in step 528, information is sent to the particular MFP. The information includes data that indicates the features, options and the copy function selected by the user. In step 530, the user physically goes to the particular MFP and performs one or more actions necessary to complete the copy operation. This may include, for example, placing a printed document into a scan feeder of the MFP and selecting one or more controls to initiate the scan operation by the MFP.

If, in step 526, the user selected to perform a scan function at the particular MFP, then in step 532, the user selects a destination for the scanned document data, for example, by selecting a graphical user interface object that corresponds to a particular destination. In step 534, information is sent to the particular MFP. The information includes data that indicates the features, options and the scan function selected by the user. In step 536, the user physically goes to the particular MFP and performs one or more actions necessary to complete the scan operation. This may include, for example, placing a printed document into a scan feeder of the MFP and selecting one or more controls to initiate the scan operation by the MFP. In step 538, the particular MFP sends the scan data to the destination specified by the user.

In the foregoing example, the user specifies the function to be performed at the particular MFP via the GUI provided by remote MFP GUI application 128. Embodiments are not limited to this context however, and the function to be performed by the particular MFP may be specified by the user at the particular MFP. In this example, the information transmitted by the remote MFP GUI application 128 to the MFP may not specify the function to be performed by the particular MFP.

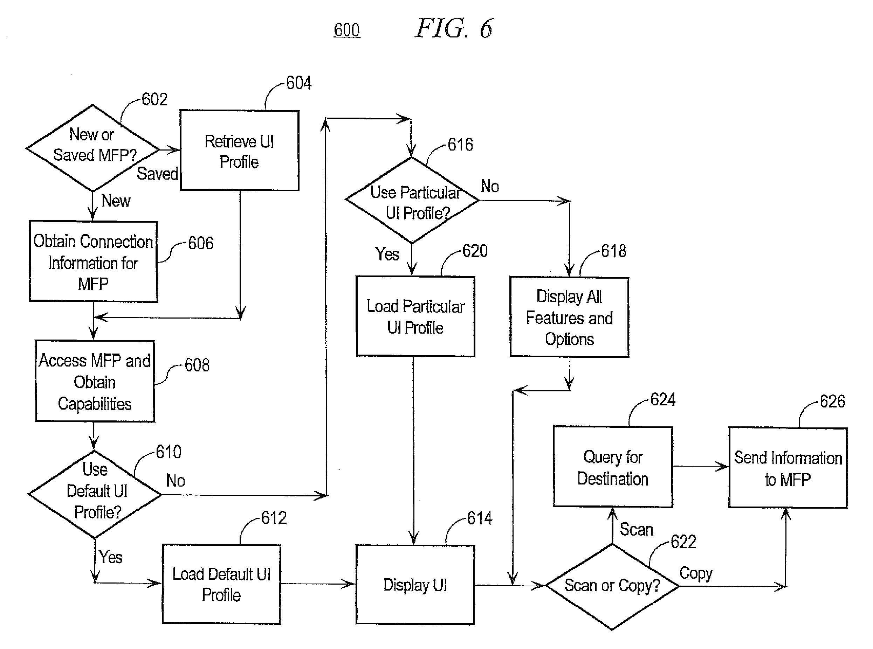

FIG. 6 is a flow diagram 600 that depicts an approach for performing functions on an MFP using UI profiles from perspective of remote MFP GUI application 128. In step 602, a determination is made whether the user intends to use an MFP for which a UI profile has already been created, or a new MFP, for which a UI profile has not yet been created. For example, remote MFP GUI application 128 may provide graphical user interface objects that correspond to the MFPs that have a saved UI profile. The user may select a graphical user interface object associated with one of the MFPs, or select a "new" button to indicate an intention to use an MFP that does not have a saved UI profile. If the user indicates an intention to use an MFP for which a UI profile has been created, then in step 604, the user selects an MFP and the corresponding UI profile is retrieved. For example, remote MFP GUI application 128 may display a list of MFPs that have saved UI profiles as depicted in FIG. 2B, and a UI profile is retrieved in response to the user selecting a particular MFP.

If, in step 602, the user indicates an intention to use a particular MFP that does not have a saved UI profile, then in step 606, connection information is obtained for the MFP. For example, a user may be queried for data that indicates how to establish communications with the MFP, such as an IP address/port, URL, etc. Alternatively, remote MFP GUI application 128 may cause data acquisition component 124 to acquire data displayed on the particular MFP, for example, displayed on a GUI of the particular MFP or printed on or affixed to the particular MFP. The data that indicates how to establish a communications link with the particular MFP and may include, for example, an IP address/port number, or URL for the particular MFP. The data may be encoded, for example, via a barcode, QR code, or other symbol and decoded by remote MFP GUI application 128.

In step 608, data that indicates the features and options current supported by the MFP is obtained, for example, by querying the MFP. In step 610, a determination is made whether the default UI profile is to be used. If so, then in step 612, the default profile is loaded and the features and options are displayed. In step 614, a GUI is displayed with features and options for the particular MFP.

If, in step 610, a determination is made that the default UI profile is not to be used, then in step 616, a determination is made whether a particular UI profile for the MFP is to be used. If not, then in step 618, all features and options are displayed. This may be done, for example, by loading a global UI profile represented by global UI profile data 402. If, in step 616, a determination is made that the particular UI profile is to be used, then in step 620, the particular UI profile for the MFP is loaded and in step 614, the features and options are displayed.

In step 622, a determination is made whether the user has selected to perform scanning or copying at the particular MFP. The function to be performed may be selected via the GUI provided by remote MFP GUI application 128. For example, the GUI provided by remote MFP GUI application 128 may include graphical user interface objects that correspond to the functions supported by the particular MFP. Other functions may be used instead of, or in addition to, scanning and copying, and scanning and copying are depicted in the figures and described herein for the purposes of explanation. If scanning is to be performed, then in step 624, the user is queried for a destination for the scan data and in step 626, the information is sent to the MFP. The information includes data that indicates the features, options and the scan function selected by the user.

### VI. IMPLEMENTATION MECHANISMS

Although the flow diagrams of the present application depict a particular set of steps in a particular order, other implementations may use fewer or more steps, in the same or different order, than those depicted in the figures.

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

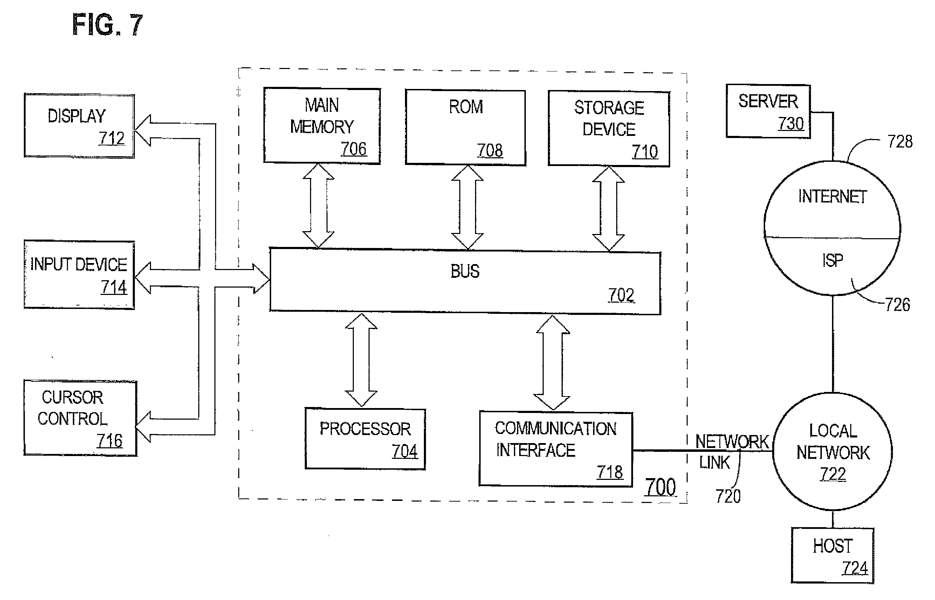

FIG. 7 is a block diagram that depicts an example computer system 700 upon which embodiments may be implemented. Computer system 700 includes a bus 702 or other communication mechanism for communicating information, and a processor 704 coupled with bus 702 for processing information. Computer system 700 also includes a main memory 706, such as a random access memory (RAM) or other dynamic storage device, coupled to bus 702 for storing information and instructions to be executed by processor 704. Main memory 706 also may be used for storing temporary variables or other intermediate information during execution of instructions to be executed by processor 704. Computer system 700 further includes a read only memory (ROM) 708 or other static storage device coupled to bus 702 for storing static information and instructions for processor 704. A storage device 710, such as a magnetic disk or optical disk, is provided and coupled to bus 702 for storing information and instructions.

Computer system 700 may be coupled via bus 702 to a display 712, such as a cathode ray tube (CRT), for displaying information to a computer user. Although bus 702 is illustrated as a single bus, bus 702 may comprise one or more buses. For example, bus 702 may include without limitation a control bus by which processor 704 controls other devices within computer system 700, an address bus by which processor 704 specifies memory locations of instructions for execution, or any other type of bus for transferring data or signals between components of computer system 700.

An input device 714, including alphanumeric and other keys, is coupled to bus 702 for communicating information and command selections to processor 704. Another type of user input device is cursor control 716, such as a mouse, a trackball, or cursor direction keys for communicating direction information and command selections to processor 704 and for controlling cursor movement on display 712. This input device typically has two degrees of freedom in two axes, a first axis (e.g., x) and a second axis (e.g., y), that allows the device to specify positions in a plane.

Computer system 700 may implement the techniques described herein using customized hard-wired logic, one or more ASICs or FPGAs, firmware and/or program logic or computer software which, in combination with the computer system, causes or programs computer system 700 to be a special-purpose machine. According to one embodiment, those techniques are performed by computer system 700 in response to processor 704 processing instructions stored in main memory 706. Such instructions may be read into main memory 706 from another computer-readable medium, such as storage device 710. Processing of the instructions contained in main memory 706 by processor 704 causes performance of the functionality described herein. In alternative embodiments, hard-wired circuitry may be used in place of or in combination with software instructions to implement the embodiments. Thus, embodiments are not limited to any specific combination of hardware circuitry and software.

The term "computer-readable medium" as used herein refers to any medium that participates in providing data that causes a computer to operate in a specific manner. In an embodiment implemented using computer system 700, various computer-readable media are involved, for example, in providing instructions to processor 704 for execution. Such a medium may take many forms, including but not limited to, non-volatile media and volatile media. Non-volatile media includes, for example, optical or magnetic disks, such as storage device 710. Volatile media includes dynamic memory, such as main memory 706. Common forms of computer-readable media include, without limitation, a floppy disk, a flexible disk, hard disk, magnetic tape, or any other magnetic medium, a CD-ROM, any other optical medium, a RAM, a PROM, and EPROM, a FLASH-EPROM, any other memory chip, memory cartridge or memory stick, or any other medium from which a computer can read.

Various forms of computer-readable media may be involved in storing instructions for processing by processor 704. For example, the instructions may initially be stored on a storage medium of a remote computer and transmitted to computer system 700 via one or more communications links. Bus 702 carries the data to main memory 706, from which processor 704 retrieves and processes the instructions. The instructions received by main memory 706 may optionally be stored on storage device 710 either before or after processing by processor 704.

Computer system 700 also includes a communication interface 718 coupled to bus 702. Communication interface 718 provides a communications coupling to a network link 720 that is connected to a local network 722. For example, communication interface 718 may be a modem to provide a data communication connection to a telephone line. As another example, communication interface 718 may be a local area network (LAN) card to provide a data communication connection to a compatible LAN. Wireless links may also be implemented. In any such implementation, communication interface 718 sends and receives electrical, electromagnetic or optical signals that carry digital data streams representing various types of information.

Network link 720 typically provides data communication through one or more networks to other data devices. For example, network link 720 may provide a connection through local network 722 to a host computer 724 or to data equipment operated by an Internet Service Provider (ISP) 726. ISP 726 in turn provides data communication services through the world wide packet data communication network now commonly referred to as the "Internet" 728. Local network 722 and Internet 728 both use electrical, electromagnetic or optical signals that carry digital data streams.

Computer system 700 can send messages and receive data, including program code, through the network(s), network link 720 and communication interface 718. In the Internet example, a server 730 might transmit a requested code for an application program through Internet 728, ISP 726, local network 722 and communication interface 718. The received code may be processed by processor 704 as it is received, and/or stored in storage device 710, or other non-volatile storage for later execution.

In the foregoing specification, embodiments have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A mobile device comprising:
one or more processors;
one or more memories;
a display;
a wireless communications interface; and
a remote multi-function peripheral (MFP) graphical user interface (GUI) application configured to:
retrieve, for a particular MFP, capability data that indicates one or more features and options supported by the particular MFP;
cause, to be displayed on the display of the mobile device, a graphical user interface that visually depicts the one or more features and options supported by the particular MFP and provides graphical user interface controls for selecting and de-selecting the one or more features and for specifying one or more options for the one or more features;
generate user selection data that specifies user selection or de-selection of the one or more features or the one or more specified options for the one or more features; and
cause the user selection data that specifies the user selection or de-selection of the one or more features or the one or more specified options for the one or more features to be transmitted to the particular MFP,
wherein the particular MFP uses the user selection data that specifies the user selection or de-selection of the one or more features or the one or more specified options for the one or more features to perform one or more functions at least initiated by a user at the particular MFP.

2. The mobile device of Claim 1, wherein the remote MFP GUI application is further configured to cause, to be retrieved from the particular MFP, connection data that specifies data necessary for the mobile device to access the particular MFP.

3. The mobile device of Claim 2, wherein the connection data that specifies data necessary for the mobile device to access the particular MFP is in an encoded form; and
the remote MFP GUI application is further configured to decode encoded connection data to recover the connection data that specifies data necessary for the mobile device to access the particular MFP.

4. The mobile device of Claim 1, wherein the remote MFP GUI application is further configured to:
cause encoded capability data to be retrieved from the particular MFP, wherein the encoded capability data includes, in an encoded form, the capability data that indicates one or more features and options supported by the particular MFP; and
cause the encoded capability data to be decoded to obtain the capability data.

5. The mobile device of Claim 1, wherein:
the graphical user interface controls include one or more controls for storing the user selection data that specifies the user selection or de-selection of the one or more features or the one or more specified options for the one or more features specified by a user of the mobile device; and
in response to a user selection of the one or more controls for storing the user selection data that specifies the user selection or de-selection of the one or more features or the one or more specified options for the one or more features, profile data in association with the particular MFP that specifies the user selection data that specifies the user selection or de-selection of the one or more features or the one or more specified options for the one or more features is stored.

6. The mobile device of Claim 5, wherein the profile data is stored in association with two or more MFPs that include the particular MFP.

7. The mobile device of Claim 5, wherein the profile data for the particular MFP is stored in one or more of the mobile device or a location external to the mobile device.

8. A method executed by a remote multi-function peripheral (MFP) graphical user interface (GUI) application on a mobile device, comprising:
retrieving, for a particular MFP, capability data that indicates one or more features and options supported by the particular MFP;
causing, to be displayed on the display of the mobile device, a graphical user interface that visually depicts the one or more features and options supported by the particular MFP and provides graphical user interface controls for selecting and de-selecting the one or more features and for specifying one or more options for the one or more features;
generating user selection data that specifies user selection or de-selection of the one or more features or the one or more specified options for the one or more features; and
causing the user selection data that specifies the user selection or de-selection of the one or more features or the one or more specified options for the one or more features to be transmitted to the particular MFP,
wherein the particular MFP uses the user selection data that specifies the user selection or de-selection of the one or more features or the one or more specified options for the one or more features to perform one or more functions at least initiated by a user at the particular MFP.

9. The method of Claim 8, further comprising:
causing, to be retrieved from the particular MFP, connection data that specifies data necessary for the mobile device to access the particular MFP.

10. The method of Claim 9, wherein the connection data that specifies data necessary for the mobile device to access the particular MFP is in an encoded form, the method further comprising:
decoding encoded connection data to recover the connection data that specifies data necessary for the mobile device to access the particular MFP.

11. The method of Claim 8, further comprising:
causing encoded capability data to be retrieved from the particular MFP, wherein the encoded capability data includes, in an encoded form, the capability data that indicates one or more features and options supported by the particular MFP; and
causing the encoded capability data to be decoded to obtain the capability data.

12. The method of Claim 8, wherein:
the graphical user interface controls include one or more controls for storing the user selection data that specifies the user selection or de-selection of the one or more features or the one or more specified options for the one or more features specified by a user of the mobile device; and
in response to a user selection of the one or more controls for storing the user selection data that specifies the user selection or de-selection of the one or more features or the one or more specified options for the one or more features, profile data in association with the particular MFP that specifies the user selection data that specifies the user selection or de-selection of the one or more features or the one or more specified options for the one or more features is stored.

13. The method of Claim 12, wherein the profile data is stored in association with two or more MFPs that include the particular MFP.

14. A program for causing a computer to execute the method of claim 8.

15. A non-transitory computer-readable medium storing computer-executable instructions for execution by a processing system, wherein, the computer-executable instructions, when executed, cause the processing system to carry out the method of claim 8.
